# Europäisches Patentamt
# European Patent Office
# Office européen des brevets

(19)

(11) Veröffentlichungsnummer : **0 134 451 B1**

(12)

# EUROPÄISCHE PATENTSCHRIFT

(45) Veröffentlichungstag der Patentschrift :
01.02.89

(21) Anmeldenummer : 84107404.0

(22) Anmeldetag : 28.06.84

(51) Int. Cl.⁴ : **C 08 F 2/26**, C 08 F 6/22, C 09 J 3/14

(54) Verfahren zur Herstellung von redispergierbarem Pulver auf Basis von mit als Schutzkolloid verwendeten Naturstoffen stabilisierten Dispersionen.

(30) Priorität : 01.07.83 DE 3323810
01.07.83 DE 3323804
01.07.83 DE 3323851
10.05.84 DE 3417388

(43) Veröffentlichungstag der Anmeldung :
20.03.85 Patentblatt 85/12

(45) Bekanntmachung des Hinweises auf die Patenterteilung : 01.02.89 Patentblatt 89/05

(84) Benannte Vertragsstaaten :
BE CH DE FR GB LI NL

(56) Entgegenhaltungen :
GB-A- 854 191
US-A- 3 769 248
US-A- 3 784 491
Die Akte enthält technische Angaben, die nach dem Eingang der Anmeldung eingereicht wurden und die nicht in dieser Patentschrift enthalten sind.

(73) Patentinhaber : WACKER-CHEMIE GMBH
Prinzregentenstrasse 22
D-8000 München 22 (DE)

(72) Erfinder : Schulze, Joachim, Dr. Dipl.-Chem.
Rudolf-Diesel-Strasse 2
D-8263 Burghausen (DE)
Erfinder : Adler, Klaus, Dr. Dipl.-Chem.
Lindenweg 13
D-8263 Burghausen (DE)
Erfinder : Eck, Herbert, Dr. Dipl.-Chem.
Burg 11
D-8263 Burghausen (DE)
Erfinder : Brabetz, Hartmut, Dr. Dipl.-Chem.
Ludwig-Thoma-Strasse 29
D-8263 Burghausen (DE)
Erfinder : Jira, Reinhard, Dr. Dipl.-Chem.
Haydnstrasse 13/I
D-8263 Burghausen (DE)
Erfinder : Hopf, Heinrich
Mehringer Strasse 49a
D-8263 Burghausen (DE)

EP 0 134 451 B1

## Beschreibung

Redispergierbare Pulver (RD-Pulver), die aus Dispersionen der verschiedensten Polymerisate hergestellt werden können, gewinnen für die unterschiedlichsten Zwecke immer mehr an Bedeutung. Im allgemeinen wird bei der Herstellung dieser Pulver von mit Schutzkolloid und/oder Emulgator stabilisierten Dispersionen ausgegangen, diese werden in bekannten Verfahren getrocknet und dabei oder danach mit Zusätzen gegen Verblockung während der Lagerung geschützt.

Als Schutzkolloid sind in den Dispersionen im allgemeinen Cellulosederivate oder bevorzugt künstlich hergestellte hydrophile Polymere, z. B. teilweise hydrolysiertes Polyvinylacetat enthalten. Viele bekannte Dispersionen lassen sich jedoch nicht zu RD-Pulvern trocknen, z. B. lassen sich viele Polymerpulver nicht wieder redispergieren.

Es wurde nun gefunden daß sich auch RD-Pulver ausgehend von Polymerdispersionen herstellen lassen, die mit Naturstoffen oder modifizierten Naturstoffen stabilisiert sind.

Gegenstand der Erfindung ist ein Verfahren zur Herstellung eines rieselfähigen, gut dispergierbaren Dispersionspulvers durch Trocknung einer wäßrigen Dispersion gegebenenfalls unter Zugabe von Antibackmitteln und/oder weiteren Zusätzen, wobei die Dispersion durch Emulsions(co)polymerisation einer oder mehrerer ethylenisch ungesättigten (co)polymerisierbaren Verbindung(en) mittels freie Radikale bildender Initiatoren in Gegenwart von Schutzkolloid und gegebenenfalls von weiteren üblichen Zusätzen hergestellt worden ist, dadurch gekennzeichnet, daß die wäßrige Dispersion als einzige Dispersionshilfsstoffe mindestens ein Schutzkolloid aus der Gruppe der wasserlöslichen Stärken der wasserquellbaren Stärken, die jeweils höchstens 30 Gew.-% Amylose enthalten, der abgebauten Stärken von Stärken, die cyanalkyliert, hydroxyalkyliert und/oder carboxymethyliert sind der wasserlöslichen Proteine oder deren Gemische enthält, daß die Dispersion mit Hilfe zumindest teilweise wasserlöslicher Initiatoren gegebenenfalls in Form eines Redox-Initiatorsystems hergestellt worden ist, wobei die peroxidischen Initiatoren in Mengen von mindestens 30 mmol, bezogen auf 1 kg des gesamten Monomeren (gemisches), eingesetzt wurden, und daß die Dispersion in Gegenwart von insgesamt mindestens 5 Gew.-% an Schutzkolloid und gegebenenfalls zugesetzter wasserlöslicher Verdüsungshilfe aus der Gruppe der vorstehend definierten Stärken, Stärkederivate, Proteine und/oder wasserlöslichen Polymeren mit hohen Polymerisationsgraden getrocknet wird.

In den EP-A-133 899, EP-A-134 449 und EP-A-134 450 sind Dispersionen beschrieben, wie sie zum vorteilhaften Herstellen von RD-Pulvern benutzt werden können. Auf ihren Inhalt wird hier ausdrücklich bezug genommen und er wird hier als Teil der vorliegenden Offenbarung betrachtet.

Die entsprechenden Polymerdispersionen werden hergestellt durch Polymerisation ethylenisch ungesättigter Verbindungen mittels freier Radikale liefernder, zumindest teilweise wasserlöslicher Initiatoren bei Reaktionstemperaturen von + 10 bis + 100 °C in Gegenwart von Stärken, Stärkederivaten, wasserlöslichen Proteinen und gegebenenfalls weiterer üblicher Zusatzstoffen.

Erfindungsgemäß werden solche Dispersionen benutzt, die Polymere, insbesondere von Styrol, das gegebenenfalls substituiert sein kann (Meth-) Acrylsäureestern mit verzweigten oder unverzweigten gesättigten $C_1$- bis $C_{18}$-Alkoholen, (Meth-)Acrylnitril, Dienen, Vinyl- und/oder Allylestern von aliphatischen, araliphatischen oder aromatischen $C_1$- bis $C_{19}$-Carbonsäuren enthalten.

Die Monomeren, die die vorstehenden Polymeren ergeben, können in vielen Fällen einzeln, oder, soweit es die Copolymerisationsparameter gestatten, im Gemisch, gegebenenfalls mit weiteren Monomeren, insbesondere mit Alkenen, wie Ethylen, Propylen, Isobutylen, mit Fumar- und Maleinsäure, deren Mono- und/oder Dieestern mit den oben genannten Alkoholen, deren Amiden oder Nitrilen oder mit Vinylidenhalogeniden (co)polymerisiert werden.

Auch Vinylsulfonate, Monoester von Di- oder Polyhydroxylverbindungen mit (Meth-)Acrylsäure oder Crotonsäure, N-Vinyl-2-pyrrolidon, Vinylpyridin, N-Vinyllactone, Vinyl-oder Allyl(di-)acetylacetat, Vinyl- oder (Meth-)Acryloylalkoxysilane ; Vinyl- oder Allylverbindungen von Glycidylalkohol, alpha-Chloralkylcarbonsäuren und Dichlortriazinen, sowie olefinisch ungesättigte N-Methylolamide z. B. N-Methylol (meth)acrylamid, N-Methylolallylcarbamat, N-Methylolallyl-ether, Mannichbasen, N-Methylolester und -ether von N-Methylol(meth)acrylamid können als Comonomere eingesetzt werden.

Als bi- oder polyfunktionelle Comonomere seien beispielsweise die folgenden Verbindungen genannt :

Divinyl- und Diallylether von Glykolen, Divinyl- und Diallylester von gesättigten Dicarbonsäuren, Polyvinyl- und Polyallylester von Polycarbonsäuren, Di- und Polyester von Di- und Polyhydroxyverbindungen mit (Meth-)Acrylsäure, Vinyl- und Allylester der (Meth-)Acryl-, Croton-, Malein- und Fumarsäure und Divinylbenzol.

Die erwähnten Comonomeren können, soweit es die Copolymerisationsparameter und die gewünschten Eigenschaften der Dispersion bzw. des Copolymerisates zulassen, mit den eingangs genannten Monomeren oder deren Gemischen copolymerisiert werden.

Als Beispiele für die Monomeren, die sich erfindungsgemäß homo- oder copolymerisieren lassen, seien genannt :

Styrol, Chlorstyrol, Methylstyrol, Methyl-(meth)acrylat, Ethyl(meth)acrylat, Propyl(meth)acrylat, Butyl(meth)acrylat, Ethylhexyl(meth)acrylat, Lauryl(meth)acrylat, Butadien,

2

Isopren, Cyclobutadien, Vinylidenchlorid, Vinylformiat, Vinylacetat, Vinylpropionat, Vinylhexanoat, Vinyllaurat, Vinylstearat, die den genannten Vinylestern entsprechenden Allylester und Vinylester von in α-Stellung verzweigten Alkylcarbonsäuren, die nach der sogenannten Koch-Synthese hergestellt werden (Ester der Versatic[R]-säuren, Shell AG).

Als freie Radikale liefernde, zumindest teilweise wasserlösliche Initiatoren die vorzugsweise in Kombination mit wasserlöslichen Reduktionsmitteln als Redox-Initiatorsystem eingesetzt werden, eignen sich Wasserstoffperoxid, Ketoperoxide insbesondere Acetylacetonperoxid und/oder organische Hydroperoxide ; bevorzugt werden Alkyl- und/oder Arylalkylhydroperoxide verwendet. Namentlich zu nennen sind : Isopropylhydroperoxid, tert.-Butylhydroperoxid. Cumolhydroperoxid, Diisopropylphenylhydroperoxid, Pinanhydroperoxid, p-Nitrocumolhydroperoxid, p-tert.-Butylphenylhydroperoxid, tert.-Amylhydroperoxid, 2,5-Dimethylhexan-2,5-dihydroperoxid.

Als bevorzugte Reduktionsmittel sind reduzierende Schwefelverbindungen, insbesondere Salze der Sulfoxylsäure und der schwefeligen Säure sowie Ascorbinsäure zu nennen. Als einzelne Schwefelverbindungen sind Natrium- und Zinkformaldehydsulfoxylate, Natriumbisulfit und Natriumsulfit zu nennen.

Die genannten Oxydations- und Reduktionsmittel können jeweils einzeln oder als Gemische verwendet werden. Vorzugsweise wird die Oxydationskomponente gegenüber der Reduktionskomponente im Überschuß eingesetzt. Dies kann z. B. dadurch geschehen, daß das Oxydationsmittel ganz oder teilweise vorgelegt wird, während das Reduktionsmittel und gegebenenfalls der Rest der Oxydationskomponente vorzugsweise im Maße ihres Verbrauches während der Polymerisation dosiert werden.

Selbstverständlich können aber auch beide Komponenten eines Redox-Systems dosiert werden. Der peroxidische Initiator wird in Mengen von mindestens 30 mmol, vorzugsweise mindestens 45 mmol, bezogen auf 1 kg des gesamten Monomeren (-gemisches) eingesetzt. Die Menge des gegebenenfalls mitverwendeten Reduktionsmittels beträgt vorzugsweise 15 bis 95 Mol-%, insbesondere bis 80 Mol-% bezogen auf peroxidische Verbindung(en).

Als Reaktionsgemisch werden hier das Wasser und darin gelöste oder dispergierte Reaktionskomponenten und Verbindungen bezeichnet.

Die Obergrenze der Konzentration des Initiators richtet sich nach Art der eingesetzten Monomeren und insbesondere nach der gewählten Reaktionstemperatur und dem beabsichtigten Polymerisationsgrad. Auch das Schutzkolloid hat einen gewissen Einfluß auf die zu verwendete Menge des Initiators. Der Fachmann kann die optimalen Mengen jedoch in einigen wenigen Vorversuchen ohne Schwierigkeiten ermitteln. Im allgemeinen werden 2 Gew.-% bezogen auf die Gesamtmenge der Monomeren genügen.

Als Schutzkolloide werden einzeln oder im Gemisch miteinander wasserlösliche bzw. in Wasser quellbare Stärken, sogenannte Quellstärken und/oder abgebaute Stärken, vorzugsweise durch Hydrolyse, insbesondere durch saure Hydrolyse abgebaute Stärken, die vielfach auch als Dextrine bezeichnet werden eingesetzt.

Die Quellstärken sind chemisch nicht modifiziert d. h. z. B. nicht verethert oder verestert, sondern lediglich z. B. durch Kochen der nativen Stärken mit Wasser wasserlöslich oder in Wasser quellbar gemacht. Bei der Auswahl der nativen Stärken brauchen im allgemeinen keine besonderen Anforderungen mit einer Ausnahme die im weiteren näher erläutert wird, beachtet zu werden. So können praktisch alle Stärken pflanzlicher Herkunft nach der oben genannten Wärmebehandlung einzeln oder als Gemisch erfindungsgemäß eingesetzt werden. Es seien als Beispiele nur Stärken aus Mais, Weizen, Kartoffeln, Tapioka, Reis, Sago und Sorghum-Hirse genannt. Es wurde allerdings festgestellt daß amylosereiche Stärken im Gegensatz zu den amylopectin-reichen Stärken ungeeignet sind. Geeignet sind solche Stärken, die höchstens zu 30 Gew.-% aus Amylose bestehen. Als durch Hydrolyse abgebaute Stärke sind Dextrine praktisch aller Stärkequellen verwendbar, zu nennen wären hier beispielsweise die vorstehend genannten Pflanzen.

Die Herstellung der Dextrine durch saure Hydrolyse braucht hier nicht eingehender beschrieben zu werden sie ist dem Fachmann bekannt.

Im übrigen gibt es die erfindungsgemäß einzusetzenden Stärken und Stärkederivate vielfach als Handelsprodukte auf dem Markt. Gleiches gilt auch für die verwendbaren Stärkederivate wie z. B. die Stärkeether.

Als Stärkeether werden benutzt Cyanalkyletherstärken, Hydroxyalkyletherstärken, z. B. Hydroxyethyl-, Hydroxypropyl-Hydroxybutyletherstärken, carboxymethylierte Stärken. Als Ausgangspunkte für die genannten Stärken lassen sich sowohl abgebaute, z. B. durch saure Hydrolyse abgebaute, als auch native Stärken einsetzen.

Bei der Wahl dieser Ausgangsprodukte brauchen im allgemeinen keine besonderen Anforderungen beachtet zu werden. So können praktisch alle Stärken pflanzlicher Herkunft eingesetzt werden, z. B. solche aus Mais, Weizen, Kartoffeln, Tapioka, Reis, Sago und Sorghum-Hirse.

Die Cyanalkylierung, Hydroxyalkylierung und Carboxymethylierung sind an sich bekannte Verfahren und brauchen deshalb hier nicht eingehender beschrieben zu werden. Auch die Substitutionsgrade sind nicht entscheidend für die Erfolge des Verfahrens, so genügen vielfach solche bis ca. 2.

Die Stärken, abgebauten Stärken und Stärkederivate werden als Schutzkolloide bevorzugt, daneben können aber auch in Wasser lösliche bzw. durch bekannte Methoden in Wasser löslich gemachte Proteine, die ebenfalls vielfach als Handelsprodukte auf dem Markt sind, eingesetzt werden, z. B.

tierische Proteine, wie Gelatine, Casein, Fischproteine, Fischproteinkonzentrate ;

pflanzliche Proteine, die z. B. aus Blatteiweißkonzentraten, Weizen, Kartoffeln, Reis, Tapioka gewonnen werden, Proteine aus Ölsamen, z. B. gewonnen aus Sojabohnen, Erdnüssen, Sonnenblumensamen, Kattunsamen, Raps, Kokosnüsse,

Proteine aus Mikroorganismen, die z. B. Stärke, Cellulose, $CO_2$, Kohlenwasserstoffe, Alkohole usw. als Kohlenstoffquelle nutzen.

Es ist natürlich auch möglich, Gemische der vorstehend genannten Verbindungen zu benutzen, doch hat man sich vorher zu vergewissern, daß die verwendeten Schutzkolloide miteinander verträglich sind. (Gleiches gilt natürlich auch für die weiter unten beschriebenen, gegebenenfalls mitverwendeten Verdüsungshilfen). Die Herstellung für den Einsatz in der vorliegenden Erfindung geeigneter Dispersionen wird in den EP-A-133 899, EP-A-134 449 und EP-A-134 450 beschrieben und braucht hier nicht mehr wiederholt zu werden.

Die Dispersionen werden durch Trocknung in die RD-Pulver überführt. Dafür müssen jedoch einige Voraussetzungen erfüllt sein, die nicht von jeder bekannten Dispersion erfüllt werden. So muß die Dispersion einen gewissen Gehalt an Schutzkolloid und gegebenenfalls nach der Herstellung der Dispersion zugesetzten wasserlöslichen Substanzen (als Verdüsungshilfe) besitzen, da anderenfalls Pulver mit schlechterer Qualität und geringerer Redispergierbarkeit entstehen oder gar überhaupt keine Pulver erhalten werden.

Die Dispersionen sollen im allgemeinen Festgehalte von 10 bis 75 Gew.-%, vorzugsweise 30 bis 65 Gew.-% aufweisen. Der optimale Festgehalt richtet sich nach Art und Menge der weiter unten beschriebenen als Verdüsungshilfe zugesetzten wasserlöslichen Substanzen und wird vorzugsweise einfach anhand viskosimetrischer Messungen im Hinblick auf das verwendete Trockensystem (z. B. Sprüh-, Walzen-, Scheibentrockner oder andere übliche Trocknersysteme) festgestellt. Für die bevorzugte Sprühtrocknung hat sich insbesondere die Viskosität des Gesamtsystems von bis zu 1 Pa · s bewährt. Im allgemeinen sollten 2 Pa · s nicht überschritten werden. Gegebenenfalls kann die Viskosität z. B. durch Zusatz von Wasser herabgesetzt werden.

Falls gewünscht und bevorzugt, kann der pH der Dispersion durch Zusatz bekannter Mittel, wie Alkalibicarbonate, -phosphate, -acetate oder Ammoniak geregelt werden z. B. auf Werte von 4 bis 7,5.

Die Trocknung der Dispersion wird gegebenenfalls in Gegenwart einer oder mehrerer wasserlöslicher Substanzen, die in Mengen von 0 bis 40 Gew.-%, vorzugsweise 0 bis 30 Gew.-%, insbesondere 0 bis 20 Gew.-% bezogen auf das Polymerisat zugesetzt werden. Die genaue optimale Menge richtet sich nach der Stabilisierung der Dispersion und nach der $T_g$ des darin enthaltenen Polymerisats.

Dabei hat es sich besonders bewährt wenn um eine gute Redispergierbarkeit zu erreichen, die Summe der Mengen an Schutzkolloid das bei der Herstellung der Dispersion verwendet wird, und der Menge an wasserlöslicher Substanz, die vielfach als Verdüsungshilfe bezeichnet wird mindestens 5 Gew.-%, besonders bevorzugt 8 Gew.-%, bezogen auf Polymerisat beträgt. Als Obergrenzen dieser Summe haben sich 50 Gew.-%, bevorzugt 30 Gew.-%, bewährt. Bei der bevorzugten Sprühtrocknung (Versprühen mittels Scheibe oder Mehrstoffdüse) liegt die optimale Menge über etwa 10 Gew.-%.

Es ist selbstverständlich möglich, die genannten Obergrenzen auch zu überschreiten wodurch die Redispergierbarkeit u. U. sogar noch verbessert werden kann jedoch kann dies nach dem Einsatz für die mechanischen Werte insbesondere nach Naßlagerung von Nachteil sein auch treten dann die Eigenschaften des Dispersionsharzes mehr und mehr gegenüber denen der Additive/Hilfsstoffe in den Hintergrund.

Als Verdüsungshilfe haben sich vor allem die eingangs als Schutzkolloide genannten Stärken, abgebauten oder modifizierten Stärken, Stärkederivate, daneben aber auch Proteine und polymere wasserlösliche Substanzen bewährt, insbesondere solche mit hohen Polymerisationsgraden und Glasübergangstemperatur ($T_g$, Phasenumwandlungspunkt 2. Ordnung) von mindestens 60 °C. Als Beispiele für solche Substanzen, die vielfach handelsüblich sind und auch bereits für diesen Zweck eingesetzt worden sind seien genannt :

Vinylalkohol-Copolymere (Polyvinylakohole), Vinylpyrrolidon-Polymere, Cellulosederivate, Ligninsulfonate, wasserlösliche Kondensationsprodukte aus Melamin und Formaldehyd, aus Naphthalinsulfonsäure und Formaldehyd, Polyacrylsäure, Polyacrylamide und deren Gemische.

Beispielhaft seien Polyvinylalkohole mit einer Viskosität von 3 bis 50 mPas vorzugsweise 3 bis 35 mPas (nach Höppler in 4 gew.-%iger Lösung in Wasser) und mit einem Hydrolysegrad von 60 bis 95 Mol-%, vorzugsweise 70 bis 93 Mol-% und Stärkederivate, bevorzugt Gelbdextrin, und ganz besonders bevorzugt Mischungen von Polyvinylalkohol und Gelbdextrin im Verhältnis von 1 : 1 bis 30 : 1, im besonderen 5 : 1 bis 15 : 1 genannt.

Prinzipiell kann die Verdüsungshilfe in beliebiger Art und Weise mit der Dispersion zusammengebracht werden, sofern sie mit der Dispersion verträglich ist, also bei der gewünschten Viskosität der Dispersion keine Phasentrennung gibt. Bevorzugt wird die Verdüsungshilfe jedoch als wäßrige Lösung zugesetzt, wobei z. B. durch die dabei verwendete Wassermenge zugleich die Viskosität der Dispersion sofern gewünscht, gesteuert werden kann.

Bei der Verdüsung hat sich vielfach ein Gehalt an Antischaummittel (Entschäumer) als vorteilhaft erwiesen, dessen Menge in weitem Bereich variiert werden kann. Gute Ergebnisse erhält man hinsichtlich des Schaumverhaltens mit Mengen von 0 bis 1 Gew.-%, bezogen auf Polymerisate. Diese Menge kann durch wenige Vorversuche noch optimiert werden, da sie sich auch nach der Dispersion und der Verdüsungshilfe richtet. Zu große Mengen an Entschäumer sollten vermieden werden, da es sonst zum Ausschwimmen gerade auch bei der Anwendung der erfindungsgemäß hergestellten Redispersionspulver in hydraulisch abbindenden Systemen kommen kann. Geeignete Entschäumer sind marktgängig und brauchen hier nicht mehr eingehend beschrieben zu werden, es seien nur solche auf Silikon- und auf Kohlenwasserstoffbasis erwähnt.

Die Dispersion wird, gegebenenfalls nach Zugabe der Verdüsungshilfe und des Entschäumers getrocknet, vorzugsweise sprühgetrocknet. Hierbei kann auf die bekannten Vorrichtungen wie z. B. Versprühen durch Mehrstoffdüsen oder mit der Scheibe in einem gegebenenfalls erhitzten Trockengasstrom zurückgegriffen werden. Im allgemeinen werden Temperaturen über 250 °C nicht angewandt. Die optimale Temperatur des Trockengases kann in wenigen Versuchen ermittelt werden, oft haben sich Temperaturen über 60 °C besonders bewährt. Zur Erhöhung der Lagerfähigkeit und um z. B. bei Pulvern mit niedriger $T_g$ ein Verbacken und Verblocken zu verhindern und um somit die Redispergierbarkeit zu verbessern, wird das erhaltene Pulver mit 0 bis 30 Gew.-%, bezogen auf das Gesamtgewicht polymerer Bestandteile (Polymerisat und Verdüsungshilfe), an Antiblock-(Antiback-)mittel versetzt. Dies erfolgt vorzugsweise, solange das Pulver noch fein verteilt ist, z. B. noch im Trockengas suspendiert ist. Insbesondere werden diese Mittel räumlich getrennt aber gleichzeitig mit der Dispersion in die Trocknungsvorrichtung dosiert.

Es können alle für diesen Zweck bisher schon eingesetzten Antiblockmittel auch erfindungsgemäß eingesetzt werden. Hierbei kann nach der Faustregel verfahren werden, je länger die beabsichtigte Lagerdauer sein soll desto höher sollte auch der Antiblockmittelgehalt gewählt werden. Geeignet als Antiblockmittel sind z. B. fein gemahlene Aluminiumsilikate, Kieselgur, kolloidales Silikagel, pyrogen erzeugtes Siliciumdioxid, gemahlene Tone, Leichtspat, feine Silikate, Talkum, Zemente, Diatomeenerde, Calciumcarbonat u. ä. Besonders geeignet sind Stoffe mit mittleren Teilchengrößen von 0,1 bis 50 μm in Mengen von vorzugsweise 2 bis vorzugsweise 25 Gew.-%, bezogen auf die polymeren Bestandteile des Pulvers. Hierbei genügen bei gröberen Pulvern im allgemeinen auch geringere Mengen.

Auf die vorstehend beschriebene Art und Weise erhält man ein Redispersionspulver, das nicht nur die allgemein üblichen Kriterien für ein gutes Redispersionspulver wie gute Redispergierbarkeit erfüllt, sondern auch ein breit gefächertes Anwendungsspektrum besitzt.

Die hergestellten Redispersionspulver können z. B. sehr gut eingesetzt werden zur Herstellung von Klebstoffen, wie Tapetenpulvern oder anderen pulverförmigen Klebern, oder auch als Zusatz zu anderen Klebstoffen gerade auch auf natürlicher Basis wie Stärkeklebstoffe, Caseinkiebstoffe und andere. Genauso können die Klebstoffe gut eingesetzt werden in der Textil- und auch Papierindustrie, in der Bauindustrie erbringen die neuen RD-Pulver ein sehr weites neues Eigenschaftsspektrum. Gefördert werden durch die Pulver, zum Beispiel wenn sie mit Casein hergestellt sind, die Verlaufseigenschaften von Spachtelmassen, was bei selbstnivellierenden Spachtelmassen geschätzt wird, genauso wird bei anderen das Wasserrückhaltevermögen oder die Standfestigkeit hydraulisch abbindender Massen (z. B. Zement) verbessert. Es ließe sich noch eine Fülle von Einsatzgebieten aufzählen, allgemein gilt, daß die Pulver überall dort gut eingesetzt werden können, wo auch schon bisher die entsprechenden Schutzkolloide als alleinige Bindemittel oder auch zusammen mit anderen eingesetzt werden.

Die folgenden Beispiele dienen der weiteren Erläuterung der Erfindung. Alle %-Angaben verstehen sich soweit nicht anders angegeben, als Gew.-%.

TBHP bedeutet tert.-Butylhydroperoxid, NFS natriumformaldehydsulfoxylat und NS Natriumsulfit.

Beispiele :

In einem zylindrischen Reaktionsgefäß mit Ankerrührer, Rückflußkühler, Thermometer und Zulaufgefäßen für Initiator, Monomer (engemisch) und Pufferlösung wurden Wasser wasserlösliches Schutzkolloid gegebenenfalls Teile des Katalysatorsystems, gegebenenfalls ein Teil der Monomeren und gegebenenfalls Zusatzstoffe vorgelegt, unter Rühren auf Reaktionstemperatur gebracht und der Rest dosiert. Nach Ende der Polymerisation wurde gegebenenfalls noch 1/2 Stunde in üblicher Weise nachpolymerisiert.

Beispiel 1

Monomere : Vinylacetat wurde als Voremulsion dosiert,

Schutzkolloid : Gelita Sol E

2 % vorgelegt (nicht gelierende abgebaute Gelatine, Gelatinefabrik Eberbach)

4 % dosiert

Katalysatorsystem : TBHP 0,2 % vorgelegt
                                          0,7 % dosiert

NFS, NS je                   0.2 % dosiert

Vinylacetat wurde in Voremulsion mit Schutzkolloid gefahren, so daß die Monomerkonzentration sich im Bereich von 5 bis 10 Gew.-% bewegte.

Die Polymerisation wurde bei 65 °C und einem pH-Wert von 5,5 durchgeführt. 2 l der erhaltenen Dispersion mit einem Festgehalt von 51,9 % und einer Viskosität von Brookfield 20 von 62 mPa · s wurden mit 1 l 6 gew.-%iger Gelita Sol E Lösung versetzt. Zum Ansatz wurden 4 g handelsüblicher Entschäumer auf Siliconbasis (Fa. Wacker-Chemie GmbH) gegeben und dann durch eine Zweistoffdüse versprüht. Als Verdüsungskomponente diente auf 5 bar vorgepreßte Luft, die gebildeten Tropfen wurden mit auf 95° C erhitzter Luft im Gleichstrom getrocknet. Das erhaltene trockene Pulver wurde mit 15 Gew.-% handelsüblichem Antiblockmittel (Gemisch aus Calcium-Magnesium-Carbonat und Magnesiumhydrosilikat) versetzt. Das Pulver war sehr lagerstabil und gut redispergierbar.

## Beispiel 2

Monomere : Styrol 40 % dosiert, Butylacrylat 60 % dosiert, Voremulsion

Schutzkolloid : Casinella QS 1 % in Vorlage 3 % dosiert (Casein Fa. Meggle Wasserburg)

Katalysatorsystem : TBHP 0,2 % vorgelegt, 0,7 % dosiert

NFS, NS je 0,2 % dosiert

Styrol/Butylacrylat wurde in Voremulsion mit Schutzkolloid gefahren, so daß die Konzentration der Monomeren im Reaktionsgemisch zwischen 15 bis 20 Gew.-% lag. Die Polymerisation wurde bei 70 °C und pH 7 gefahren. 2 l der erhaltenen Dispersion mit einem Festgehalt von 49,7 % und einer Viskosität von 260 mPa · s (Brookfield 20) wurden mit 1.2 l 10 %iger Lösung Emulac 50 (Caseinat Fa. Meggle Milchindustrie GmbH) versetzt, dazu 5 g Siliconentschäumer (Wacker-Chemie GmbH) gegeben und dann durch eine Zweistoffdüse versprüht. Als Verdüsungskomponente diente auf 5 bar vorgepreßte Luft die gebildeten Tropfen wurden mit auf 95 °C erhitzter Luft im Gleichstrom getrocknet.

Das erhaltene trockene Pulver wurde mit 10 Gew.-% handelsüblichem Antiblockmittel versetzt. Das Pulver war sehr lagerstabil und gut redispergierbar.

## Beispiel 3

Monomere : Vinylacetat 99,3 % dosiert Vinylsulfonat 0,5 % vorgelegt, 0,2 % dosiert

Schutzkolloid : Gelbdextrin (D 3100 Avebe) 8 % vorgelegt

Katalysatorsystem : TBHP 0,9 % vorgelegt NFS, NS 0,3 % dosiert

Die Monomeren wurden so dosiert, daß die Konzentration an Monomeren im Reaktionsgefäß zwischen 5 bis 10 Gew.-% lag.

Die Polymerisation wurde bei 70 °C und pH 3,3 durchgeführt. 2 l der erhaltenen Dispersion mit einem Festgehalt von 55,7 % und einer Viskosität 66 mPa · s (Epprecht II) wurden mit 600 ml 20 %iger Dextrinlösung (Avebe D 3100) versetzt, dazu 6 g Siliconentschäumer (Wacker-Chemie GmbH) und dann durch eine Zweistoffdüse verdüst. Als Verdüsungskomponente diente auf 5 bar vorgepreßte Luft, die gebildeten Tropfen wurden mit auf 110 °C erhitzter Luft im Gleichstrom getrocknet.

Das erhaltene trockene, leicht gelbliche Pulver wurde mit 5 Gew.-% handelsüblichem silikatischen Antiblockmittel versetzt. Das Pulver war sehr lagerstabil und gut redispergierbar.

## Beispiel 4

Monomere : Vinylacetat 100 % (10 % vorgelegt, 90 % dosiert)

Schutzkolloid : Gelbdextrin 42 % (D 3100 Avebe)

Katalysatorsystem : TBHP 0,3 % (0,2 % vorgelegt, 0,1 % dosiert)

NFS 0,4 % (0,4 % dosiert)

Das Monomere wurde so dosiert, daß die Konzentration an Monomeren im Reaktionsgemisch zwischen 5 bis 10 Gew.-% betrug.

Die Polymerisation wurde bei 70 °C und pH 3,4 durchgeführt. 2 l der erhaltenen Dispersion mit einem Festgehalt von 60 % und einer Viskosität von 600 mPa · s (Epprecht II) wurden mit 1 000 ml Wasser und 5 g Silikonentschäumer versetzt und dann durch eine Zweistoffdüse verdüst. Als Verdüsungskomponente diente auf 5 bar vorgepreßte Luft, die gebildeten Tropfen wurden mit auf 105 °C erhitzter Luft im Gleichstrom getrocknet.

Das erhaltene trockene leicht gelbliche Pulver war sehr gut lagerstabil und gut redispergierbar.

## Beispiel 5

Monomere : Vinylacetat 100 % dosiert

Schutzkolloid : Weißdextrin (W 50 Avebe) 8 % vorgelegt

Katalysatorsystem : TBHP 0,9 %

NFS, NS je 0,35 % dosiert

Das Monomere wurde so dosiert daß die Monomerkonzentration im Reaktionsgemisch 5 bis 10 % betrug. Die Polymerisation wurde bei 68 °C und pH 4,1 durchgeführt. 2 l der erhaltenen Dispersion mit einem Festgehalt von 54,8 % und einer Viskosität von 445 · mPa · s (Epprecht II) wurden mit 1 l 6 %iger Gelbdextrinlösung (D 3100 Pa. Avebe) versetzt und durch eine Zweistoffdüse versprüht. Als Verdüsungskomponente diente auf 5 bar vorgepreßte Luft die gebildeten Tropfen wurden mit auf 110 °C erhitzter Luft im Gleichstrom getrocknet.

Das erhaltene trockene Pulver wurde mit 10 % handelsüblichem silikatischen Antiblockmittel versetzt. Das Pulver war sehr lagerstabil und gut redispergierbar.

## Beispiel 6

Monomere : Vinylacetat 100 % dosiert

Schutzkolloid : Stärke (Nylgum A 55 Avebe) 4 % vorgelegt

Katalysatorsystem : TBHP 1,1 % vorgelegt NFS, NS je 0,3 % dosiert

Das Monomere wurde so dosiert, daß die Monomerkonzentration im Reaktionsgemisch 5 bis 10 % betrug.

Die Polymerisation wurde bei 70 °C und pH 6,4 durchgeführt. 2 l der erhaltenen Dispersion mit einem Festgehalt von 52,6 % und einer Viskosität 648 mPa · s (Brookfield 20) wurden versetzt mit 2 l 8 %iger Nylgum A 55 Lösung und durch eine Zweistoffdüse versprüht. Als Verdüsungskomponente diente auf 5 bar vorgepreßte Luft, die gebildeten Tropfen wurden mit auf 110 °C erhitzter Luft im Gleichstrom getrocknet.

Das erhaltene trockene Pulver wurde mit 15 % handelsüblichem silikatischen Antiblockmittel versetzt. Das Pulver war sehr lagerstabil und gut redispergierbar.

## Beispiel 7

Monomere : Vinylacetat 100 % dosiert

Schutzkolloid : 65 % cyanethylierte + 35 % hydroxyethylierte Kartoffelstärke deren Substitutionsgrad bei 0,04 bis 0,05 lag

Perfectamyl A 6954 Fa. Avebe) 5 % vorgelegt

Katalysator : TBHP 1 %

NFS, FS je 0,4 % dosiert

Das Monomere wurde so dosiert, daß die Monomerkonzentration im Reaktionsgemisch unter 10 % betrug. Die Polymerisation wurde bei 70 °C und pH 4,3 durchgeführt. 2 l der erhaltenen Dispersion mit einem Festgehalt von 49,3 % und einer Viskosität von 12 990 mPa · s (Epprecht II) wurden mit 3 l einer 3 %igen Perfectamyllösung versetzt und durch eine Zweistoffdüse versprüht. Als Verdüsungskomponente diente auf 5 bar vorgepreßte Luft, die gebildeten Tropfen wurden mit auf 125 °C erhitzter Luft im Gleichstrom getrocknet. Das erhaltene trockene Pulver wurde mit 10 % handelsüblichem silikatisch-carbonatischem Antiblockmittel versetzt. Das Pulver war sehr lagerstabil und gut redispergierbar.

Beispiel 8

Monomere : Vinylacetat 100 % dosiert

Schutzkolloid : Carboxymethyl-Stärke Substitutionsgrad 0,3 (Versuchsprodukt CMA Amylum) 4 % vorgelegt

Katalysator : TBHP 0,9 % vorgelegt

NFS. NS je 0,3 % dosiert

Das Monomere wurde so dosiert, daß die Monomerkonzentration im Reaktionsgemisch unter 10 % betrug. Die Polymerisation wurde bei 70 °C und pH 4,2 durchgeführt. 2 l der erhaltenen Dispersion mit einem Festgehalt von 53,5 % und einer Viskosität von 6460 mPa · s (Epprecht II) wurden mit 2 l 5 %iger CMA-Lösung versetzt und durch eine Zweistoffdüse versprüht. Als Verdüsungskomponente diente auf 5 bar vorgepreßte Luft, die gebildeten Tropfen wurden mit auf 135 °C erhitzter Luft im Gleichstrom getrocknet.

Das erhaltene Pulver wurde mit 10 % handelsüblichem silikatischen Antiblockmittel versetzt. Das Pulver war sehr lagerstabil und gut redispergierbar.

Bei den Bereichnungen der Schutzkolloide und Verdüsungshilfe handelt es sich möglicherweise um eingetragene Warenzeichen.

**Patentansprüche**

1. Verfahren zur Herstellung eines rieselfähigen, gut redispergierbaren Dispersionspulvers durch Trocknung einer waßrigen Dispersion gegebenenfalls unter Zugabe von Antibackmitteln und/oder weiteren Zusätzen, wobei die Dispersion durch Emulsions(co)polymerisation einer oder mehrerer ethylenisch ungesättigten (co)polymerisierbaren Verbindung(en) mittels freie Radikale bildender Initiatoren in Gegenwart von Schutzkolloid und gegebenenfalls von weiteren üblichen Zusätzen hergestellt worden ist, dadurch gekennzeichnet, daß die wäßrige Dispersion als einzige Dispersionshilfsstoffe mindestens ein Schutzkolloid aus der Gruppe der wasserlöslichen Stärken, der wasserquellbaren Stärken, die jeweils höchstens 30 Gew.-% Amylose enthält, der abgebauten Stärken, von Stärken, die cyanalkyliert, hydroxyalkyliert und/oder carboxymethyliert sind, der wasserlöslichen Proteine oder deren Gemische enthalten daß die Dispersion mit Hilfe zumindest teilweise wasserlöslicher Initiatoren gegebenenfalls in Form eines Redox-Initiatorsystems hergestellt worden ist wobei die peroxidischen Initiatoren in Mengen von mindestens 30 mmol, bezogen auf 1 kg des gesamten Monomeren(gemisches), eingesetzt wurden, und daß die Dispersion in Gegenwart von insgesamt mindestens 5 Gew.-% an Schutzkolloid und gegebenenfalls zugesetzter wasserlöslicher Verdüsungshilfe aus der Gruppe der vorstehend definierten Stärken, Stärkederivate, Proteine und/oder wasserlöslichen Polymeren mit hohen Polymerisationsgraden getrocknet wird.

2. Verfahren nach Anspruch 1, dadurch gekennzeichnet, daß die wäßrige Dispersion sprühgetrocknet wird.

**Claims**

1. Process for the preparation of a free-flowing, readily dispersible dispersion powder by drying an aqueous dispersion, if appropriate with the addition of anticaking agents and/or other additives, the dispersion having been prepared by emulsion (co)polymerization of one or more ethylenically unsaturated (co)polymerizable compound(s) by means of initiators which form free radicals and in the presence of a protective colloid and if appropriate of other customary additives, characterized in that the aqueous dispersion contains as the sole dispersion auxiliaries at least one protective colloid from the group comprising water-soluble starches, water-swellable starches, which in each case contain not more than 30 % by weight of amylose, degraded starches, starches which are cyanoalkylated, hydroxyalkylated and/or carboxymethylated, water-soluble proteins or mixtures thereof, in that the dispersion has been prepared with the aid of at least partly water-soluble initiators, if appropriate in the form of a Redox initiator system, the peroxidic initiators being used in amounts of at least 30 mmol per kg of the total monomer (mixture), and in that the dispersion is dried in the presence of a total of at least 5 % by weight of protective colloid and if appropriate an added water-soluble atomizing aid from the group comprising the above-mentioned starches, starch derivatives, proteins and/or water-soluble polymers with high degrees of polymerization.

2. Process according to claim 1, characterized in that the aqueous dispersion is spray-dried.

**Revendications**

1. Procédé pour préparer une poudre dispersion fluente, facile à redisperser, par séchage d'une dispersion aqueuse, éventuellement en présence d'agents anti-agglomérations et/ou d'autres additifs, la dispersion ayant été préparée par polymérisation ou copolymérisation en émulsion d'un ou de plusieurs composés éthyléniques polymérisables ou copolymérisables au moyen d'amorceurs générateurs de radicaux libres, en présence d'un colloïde protecteur et, éventuellement, d'autres additifs usuels, procédé caractérisé en ce que la dispersion aqueuse contient, comme uniques adjuvants de dispersion, au moins un colloïde protecteur pris dans l'ensemble constitué par les amidons solubles dans l'eau, les amidons gonflables à l'eau, qui contiennent chacun au plus 30 % en poids d'amylose, les amidons dégradés, les amidons cyanalkylés, hydroxy-alky-lés et/ou carboxy-méthylés, les protéines solubles dans l'eau et leurs mélanges, en ce que la dispersion a été préparée au moyen d'amorceurs au moins partiellement solubles dans l'eau, éventuellement sous la forme d'un système amorceur rédox, les amorceurs peroxydiques ayant été mis en jeu en des quantités d'au moins 30 mmol par kilogramme du monomère total ou du mélange total de monomères, et en ce qu'on sèche la dispersion en présence d'une quantité totale d'au moins 5 % en poids d'un colloïde protecteur et d'adjuvants d'atomisation hydrosolubles, éventuellement ajoutés, pris dans l'ensemble constitué par les amidons, dérivés de l'amidon et protéines définis ci-dessus et les polymères hydrosolubles à haut degré de polymérisation.

2. Procédé selon la revendication 1 caractérisé en ce que la dispersion aqueuse est séchée par pulvérisation.